# EUROPEAN PATENT SPECIFICATION

(11) **EP 3 940 338 B1**
(45) Date of publication and mention of the grant of the patent: **09.04.2025**
(21) Application number: 21168918.7
(22) Date of filing: 16.04.2021
(51) Int. Cl.: G01B 17/00, G01N 29/24

(54) **CHARACTERIZING INTERNAL STRUCTURES VIA ULTRASOUND**
CHARAKTERISIERUNG VON INTERNEN STRUKTUREN MITTELS ULTRASCHALL
CARACTÉRISATION DE STRUCTURES INTERNES À L'AIDE D'ULTRASONS

(30) Priority: 15.07.2020 US 202063052431 P
(43) Date of publication of application: 19.01.2022
(73) Proprietor: The Boeing Company, Arlington, VA 22202 (US)
(72) Inventor: BINGHAM, Jill P, Chicago, 60606-2016 (US); GEORGESON, Gary E, Chicago, 60606-2016 (US); FETZER, Barry A, Chicago, 60606-2016 (US)
(74) Representative: Boult Wade Tennant LLP

(56) References cited:
- US-A- 5 456 113
- US-A- 5 696 326
- US-A1- 2010 283 482
- US-A1- 2012 111 115
- US-A1- 2013 036 820
- US-A1- 2017 176 321
- US-A1- 2017 248 551
- US-B2- 6 959 602

## Description

### BACKGROUND

Examples of the present disclosure relate to ultrasound inspection. More particularly, examples relate to characterizing internal structures of a component via ultrasound inspection.

Internal structures can significantly affect the mechanical properties of a component or structure, but are not readily apparent for inspection. Examples of internal structures that affect the mechanical properties of a component include: the grain size in a metal; the positioning of steel bars within concrete; the presence of knots, rot, or growth rings in wood; thicknesses and compositions of layers in a laminate material; etc. Various destructive tests, such as x-ray diffraction, core-sampling, etc., can be used in a laboratory setting to examine internal structures. Nondestructive tests are needed when testing components or structures that will be put into use after inspection.

US5456113A, in accordance with its abstract, states a method and apparatus for the nondestructive evaluation of ferromagnetic and non-ferromagnetic materials, particularly wire ropes, cables, and strands, and pipes utilizing the magnetostrictive effect for measuring minute variations in magnetic fields and characterizing these minute variations as indicative of the acoustic/ultrasonic behavior of fractures, cracks, and other anomalies within a substance under evaluation. The apparatus and method contemplate both an active testing application, wherein a transmitting sensor generates an acoustic/ultrasonic pulse within a material through the magnetostrictive effect and a second receiving sensor detects reflected acoustic/ultrasonic waves within the material, again by the inverse magnetostrictive effect. The advantages of utilizing magnetostrictive sensors as opposed to well known piezoelectric sensors lies in the ability to generate and detect acoustic/ultrasonic waves without a direct physical or acoustical contact to the material. The apparatus and method of the present invention also anticipates the use of a passive monitoring system comprised only of a receiving magnetostrictive sensor that continuously monitors a ferromagnetic or non-ferromagnetic substance for acoustic emissions and either records this monitored information or alerts the appropriate personnel of the existence of an acoustic emission indicating deterioration within the structure.

US5696326A, in accordance with its abstract, states an objective and non-destructive test of the fused joints in an armature, that can be used on every armature being manufactured on an armature manufacturing line, as well as apparatus for performing that test, are provided. The armature is immersed in an acoustic coupling medium. Acoustic pulses, preferably ultrasonic pulses, are beamed onto the commutator tang/wire interface region of a commutator tang/bar fused joint or the fused joint itself and an acoustic signature is measured. The quality of the joint can be determined by comparing the acoustic signature to a predetermined acoustic signature of known quality. A testing station on an armature production line includes a mechanism for removing the armature from the production line, immersing it in the coupling medium, and rotating it as each joint in the commutator of that armature is checked.

US6959602B2, in accordance with its abstract, states plate waves are used to determine the presence of defects within a porous medium, such as a membrane. An acoustic wave can be propagated through a porous medium to create a plate wave within the medium. The plate wave creates fast compression waves and slow compression waves within the medium that relate to the material and structural properties of the medium. The fast compression wave provides information about the total porosity of a medium. While the slow compression wave provides information about the presence of defects in the medium or the types of materials that form the medium.

US2010283482A1, in accordance with its abstract, states a system and associated method relate to non-destructive signal propagation to detect one or more defects in a substrate. The system can be built into a semiconductor process tool such as a substrate handling mechanism. The system comprises a transducer configured to convert one or more frequencies from an electrical signal into at least one mechanical pulse. The mechanical pulse is coupled to the substrate through the substrate handling mechanism. A plurality of sensors is positioned distal to the transducer and configured to be coupled, acoustically or mechanically, to the substrate. The plurality of distal sensors is further configured to detect both the mechanical pulse and any distortions to the pulse. A signal analyzer is coupled to the plurality of distal sensors to compare the detected pulse and any distortions to the pulse with a baseline response.

US2012111115A1, in accordance with its abstract, states non-contact microelectronic device inspection systems and methods are discussed and provided. Some embodiments include a method of generating a virtual reference device (or chip). This approach uses a statistics to find devices in a sample set that are most similar and then averages their time domain signals to generate the virtual reference. Signals associated with the virtual reference can then be correlated with time domain signals obtained from the packages under inspection to obtain a quality signature. Defective and non-defective devices are separated by estimating a beta distribution that fits a quality signature histogram of inspected packages and determining a cutoff threshold for an acceptable quality signature. Other aspects, features, and embodiments are also claimed and described.

US2013036820A1, in accordance with its abstract, states a method and installation for inspecting a butt weld of transverse ends of metal strips held together between first and second jaws along the ends, include leaving an interstice between the jaws for passage of a first transmission channel of incident waves generating ultrasound waves on one surface of the first strip and enabling passage of a second transmission channel of waves emerging from the surface of the second strip. The incident waves of the first channel are generated using laser pulses in an operating state implementing a third channel of waves generated on the surface of the first strip, passing through the weld, and emerging in the second channel. Weld inspection characteristics are identified by analyzing the operating state related to the pulses and a measurement of a signature of a vibration state of the surface of the second strip upon emergence of the waves in the second channel.

US2017176321A1, in accordance with its abstract, states a method of detecting inconsistencies in a composite structure is presented. A pulsed laser beam is directed towards the composite structure comprised of a number of composite materials. Wide-band ultrasonic signals are formed in the composite structure when radiation of the pulsed laser beam is absorbed by a surface of the composite structure. The wide-band ultrasonic signals are detected over a duration of time to form data. The data comprises an ultrasonic A-scan spectrum. The data is processed to identify a structure signal in a frequency domain of the ultrasonic A-scan spectrum. The structure signal of the ultrasonic A-scan spectrum is compared to a structure signal of a composite structure standard to determine whether the inconsistencies are present in the number of composite materials.

US2017248551A1, in accordance with its abstract, states a method of detecting inconsistencies in a structure is presented. A pulsed laser beam is directed towards the structure. A plurality of types of ultrasonic signals is formed in the structure when radiation of the pulsed laser beam is absorbed by the structure. The plurality of types of ultrasonic signals is detected to form data, wherein said ultrasonic signals may include at least one of shear waves, surface waves or longitudinal waves.

### SUMMARY

There is described herein a method for ultrasound testing of components with an ultrasound test device, the method, comprising: inducing, by the ultrasound test device, ultrasonic test waves on a first surface of a component, the ultrasonic test waves comprising at least two different ultrasonic test waves being selected from a group consisting of: a surface wave, traveling along the first surface from a first location to a second location; a shear wave, traveling from the first location on the first surface through the component to a second surface opposite to the first surface, and back to the first surface at the second location; and a transverse wave, traveling from a third location on the first surface through the component to the second surface, and back to the first surface at the third location; receiving, by the ultrasound test device, a signal in response to the ultrasonic test wave in the form of a waveform, the signal response comprising a waveform having a plurality of segments corresponding to the different induced waves that are received at different times; selecting, by the ultrasound test device, which segment of the received signal is of interest for further analysis by applying a gate to the received signal, thereby selecting a portion of the waveform; developing, by the ultrasound test device, a test signature based on the selected portion of the waveform in response to the ultrasonic test wave through the component; characterizing, by the ultrasound test device, an internal feature of the component based on a comparison between the test signature and a baseline signature for the component; and providing, by the ultrasound test device, an indication of the internal feature as characterized.

The test signature may be developed based on a time of flight and an attenuation amplitude signal response of the ultrasonic test waves through the component.

The test signature may be developed based on a frequency response of the ultrasonic test waves through the component. The internal feature characterized by the comparison may include at least one of a grain size, grain orientation, and a grain morphology of the component, and wherein the baseline signature is established based on a database of test result signals corresponding to known grain patterns.

One of the ultrasonic test waves may be induced by a laser.

Gating received signals at various times of signal reception may correspond to various depths in the component from a surface in which the ultrasonic test wave is induced.

There is further described herein a system, comprising: an ultrasound test device arranged to induce ultrasonic test waves in a component and measure the propagation of the ultrasonic test waves; a computer processor; and a memory including instructions that when executed by the computer processor enable the system to perform an operation comprising: inducing, by the ultrasound test device, ultrasonic test waves on a first surface of the component with the ultrasound test device, the ultrasonic test waves comprising at least two different ultrasonic test waves being selected from a group consisting of: a surface wave, traveling along the first surface from a first location to a second location; a shear wave, traveling from the first location on the first surface through the component to a second surface opposite to the first surface, and back to the first surface at the second location; and a transverse wave, traveling from a third location on the first surface through the component to the second surface, and back to the first surface at the third location; receiving, by the ultrasound test device, a signal in response to the ultrasonic test wave in the form of a waveform having a plurality of segments corresponding to the different induced waves that are received at different times; selecting, by the ultrasound test device, which segment of the received signal is of interest for further analysis by applying a gate to the signal, thereby selecting a portion of the waveform; measuring, by the ultrasound test device, the propagation of the ultrasonic test wave in the component with the ultrasound test device; receiving, by the ultrasound test device, a signal in response to the ultrasonic test wave in the form of a waveform; selecting, by the ultrasound test device, which segment of the received signal is of interest for further analysis by applying a gate to the received signal, thereby selecting a portion of the waveform; developing, by the ultrasound test device, a test signature based on the selected portion of the waveform in response to the ultrasonic test wave through the component; characterizing, by the ultrasound test device, an internal feature of the component based on a comparison between the test signature and a baseline signature for the component; and providing an indication of the internal feature as characterized.

The test signature may be developed based on a time of flight and an attenuation amplitude signal response of the ultrasonic test wave through the component.

The test signature may be developed based on a frequency response of the ultrasonic test wave through the component. The internal feature characterized by the comparison may include at least one of a grain size, grain orientation, and a grain morphology of the component, and wherein the baseline signature is established based on a database of test result signals corresponding to known grain patterns.

The ultrasonic test wave may be induced collected by a laser interferometer.

Gating received signals at various times of signal reception may correspond to various depths in the component from a surface in which the ultrasonic test wave is induced.

There is still further described herein a computer program as defined in claim 12, and a computer-readable storage device including such a computer program.

The test signature may be developed based on a time of flight and an attenuation amplitude signal response of the ultrasonic test wave through the component.

The test signature may be developed based on a frequency response of the ultrasonic test wave through the component.

The internal feature characterized by the comparison may include at least one of a grain size, grain orientation, and a grain morphology of the component, and wherein the baseline signature is established based on a database of test result signals corresponding to known grain patterns. Gating received signals at various times of signal reception may correspond to various depths in the component from a surface in which the ultrasonic test wave is induced.

### BRIEF DESCRIPTION OF THE DRAWINGS

So that the manner in which the above recited features can be understood in detail, a more particular description, briefly summarized above, may be had by reference to examples, some of which are illustrated in the appended drawings.
Figures 1A and 1B illustrate several travel paths for ultrasound waves induced in a component.
Figure 2 illustrates a waveform for an ultrasonic wave generated in a component as measured by an ultrasound receiver.
Figure 3 is a flowchart of a method for characterizing internal structures in a component via ultrasound.
Figure 4 illustrates a computing device.

### DETAILED DESCRIPTION

The present disclosure provides for ultrasound testing of various components to develop and apply a signature (also referred to as a "fingerprint") to identify and track various internal structures of the components. An ultrasound test device (UTD) induces various ultrasonic waves in the component (including one of more of longitudinal waves, surface waves, lateral waves, and shear waves) and analyses the propagating waves to identify various internal features of the component by the propagation speeds, signal attenuation (e.g., absorption, amplitude decreases, scattering), and changes in frequencies of the signals. The UTD can correlate the resultant waves to various internal features and/or identify changes in the internal structure over time based on earlier readings from the same component or other components with the same internal structures. Accordingly, a user can apply an ultrasound in a nondestructive inspection (NDI) to identify and track features internal to a component.

Although the examples given herein primarily relate to metallic components, in which the internal structures include various features of the grains within those metallic components (e.g., sizes, orientations, morphologies of the grains), the present disclosure is not limited to applications in which the component is metallic, or where the internal structure relates to the grains within that metal. Indeed, the present disclosure can be applied with any solid material, including: ceramic materials, biological or natural materials (e.g., wood, bone, tooth, horn, natural rubber), plastic or synthetic materials (e.g., various plastics, synthetic rubber, carbon fiber), mineral materials (e.g., fossils, gems, stones), laminates, textiles, and composite materials including two or more different examples of the aforementioned materials to analyze the various internal structures thereof (including the grains thereof, inclusions therein, voids therein, etc.).

Additionally, although the examples given herein primarily relate to performing NDI on components or structures that are subjected to various external loads or forces when used (e.g., the wings of an aircraft, a truss of a bridge, the walls of a pressure vessel, the hull of a ship), the present disclosure can be applied with components or structures that are not subjected to external loads or forces in everyday use (e.g., a lens of a camera, a circuit board, a work of art, an artifact).

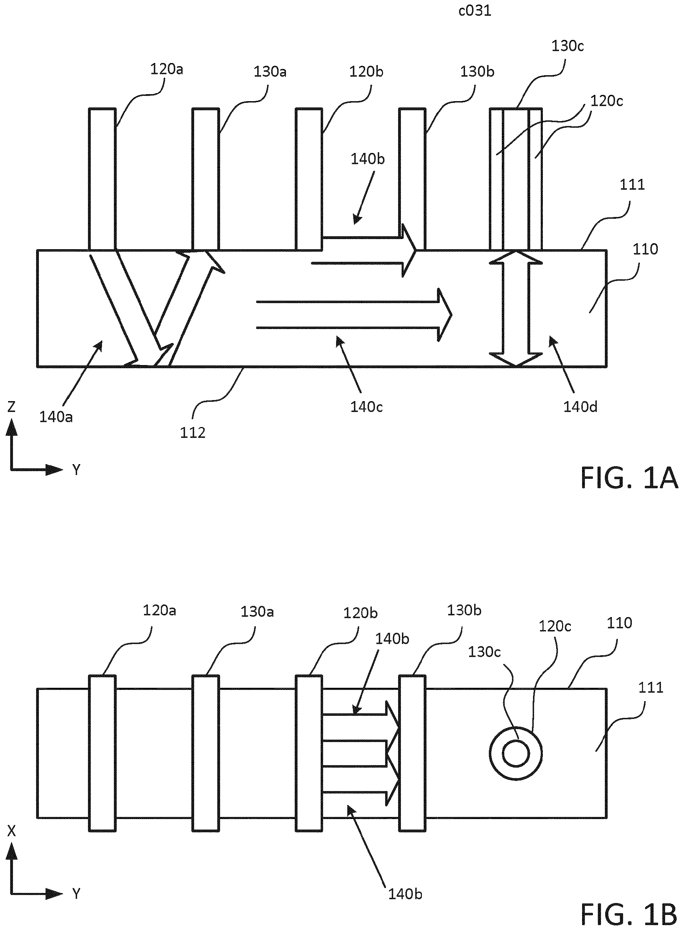

Figures 1A and 1B illustrate several travel paths for ultrasound waves induced in a component 110, according to examples of the present disclosure. Figure 1A illustrates a component 110 in cross-sectional view in the ZY plane, and Figure 1B illustrates that component 110 in the XY plane. Several ultrasound inducers 120a-c (generally or collectively, ultrasound inducers 120) and corresponding ultrasound receivers 130a-c (generally or collectively, ultrasound receivers 130) are shown in relation to the component 110 and the various wave modes 140a-c of the ultrasonic wave produced and measured by the ultrasound inducers 120a-c and ultrasound receivers 130a-c.

The component 110 includes a first surface 111 on which the one or more ultrasound inducers 120 induce various ultrasound waves that one or more ultrasound receivers 130a-c measure the waveforms therefrom, and a second surface 112 opposite to the first surface 111, which can reflect various waveforms back to the first surface 111 for measurement.

In some examples, the ultrasound inducers 120 induce the ultrasonic waves directly on the first surface 111 and the ultrasound receivers 130 measure the ultrasonic waves directly from the first surface 111. In other examples, an intermediary couplant (such as an oil, water, glycerin, or a gel) separates the ultrasound inducers 120 and/or ultrasound receivers 130 from the first surface 111 and helps reduce reflection from the first surface 111 and direct more acoustic energy into the component 110.

In some examples, the ultrasound inducers 120 include piezoelectric transducers or electromagnetic acoustic transducers that convert an electrical signal into an acoustic wave which is transferred to the component 110 and analyzed by the ultrasound receivers 130.

In various examples, the ultrasound inducers 120 include lasers, which generate a laser beam to induce ultrasonic waves in the component 110 via thermal expansion and/or ablation and recoil. The ultrasound receivers 130 can similarly include piezoelectric receivers or electromagnetic acoustic transducers that convert an acoustic wave received from the first surface 111 to an electrical signal for measurement, and laser receivers that measure vibrations in the component 110 (and/or surrounding medium) due to the acoustic waves induced by the ultrasound inducer 120. For example, a laser interferometer can be used as an ultrasound receiver 130 to collect the ultrasonic test wave(s) induced in the material by one or more ultrasound inducers 120.

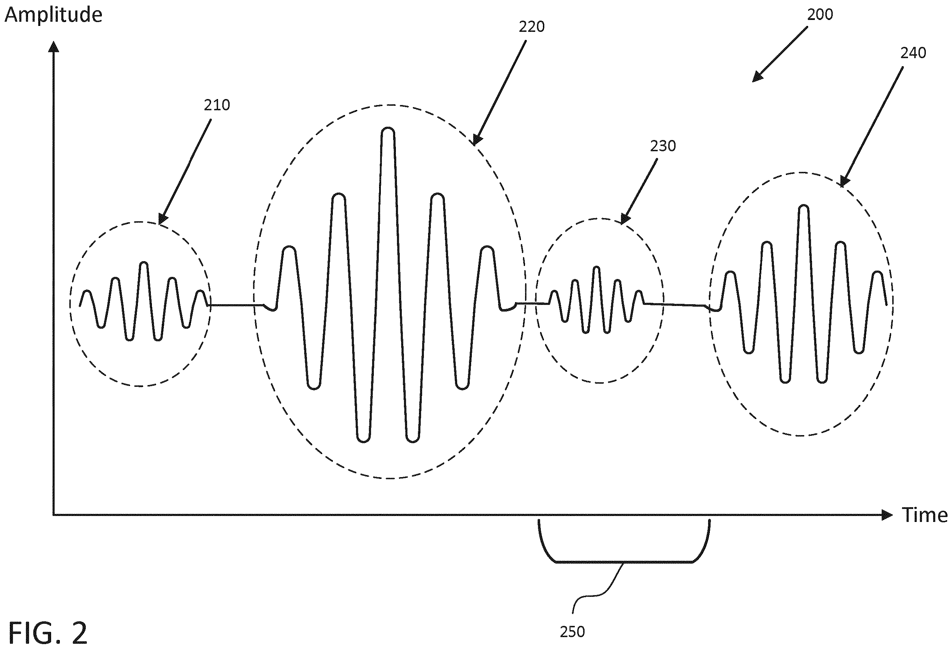

In various examples, the inducers/receivers are paired together so that a given ultrasound receiver 130 is configured to receive and measure some or all of the ultrasonic waves generated by a given ultrasound inducer 120 (e.g., 120a/130a, 120b/130b, 120c/130c). The ultrasound receivers 130 can electronically gate what portions of the received waveforms are analyzed to distinguish between various waveforms (as is discussed in greater detail in regard to Figure 2) and what depth in the material of the component 110 is analyzed. In some examples, the inducers/receivers include separated transducers (such as the first and second ultrasound inducers 120a, 120b and the first and second ultrasound receivers 130a, 130b) that induce and measure ultrasound waves at different locations (e.g., in the Y direction) on the component to measure structural features between the different locations. In various examples, inducers/receivers include point transducers (such as the third ultrasound inducer 120c and the third ultrasound receiver 130c) that induce and measure ultrasound waves at or around the same location on the component 110 to measure structural features in the depth direction (e.g., in the Z direction).

The inducers/receivers can be arranged in arrays or used singularly in various examples. For example, in Figure 1B, the third inducer/receiver 120c/130c is shown as a singular transducer that can be moved in the X and Y directions to take different measurements of the component in the Z direction. Figure 1B also shows the second inducer/receiver 120b/130b as an arrayed transducer that can generate and measure multiple waves when located at a given position, allowing a two dimensional scan of the component to be developed.

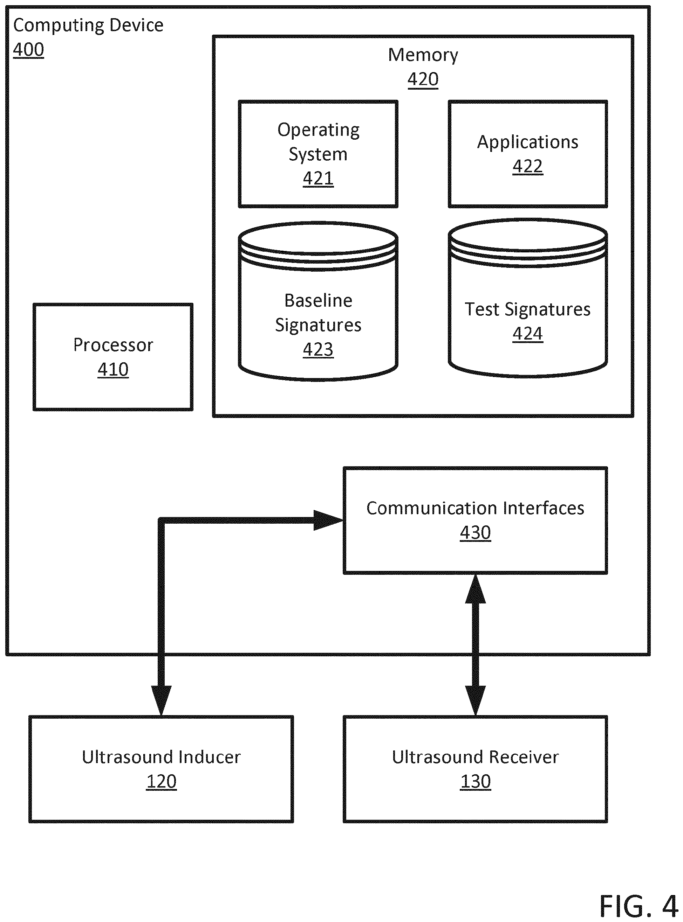

A computing device (such as the computing device 400 discussed in relation to Figure 4) can combine several readings taken at the same or different times to form various scans to characterize the internal structures of the component 100.

For example, each ultrasound wave that is generated and received can be used for an A-scan, which is a one dimensional representation of the travel of the wave through the component 110, and several A-scans can be grouped together to form a B-scan, which is a two-dimensional cross-sectional representation of the component 110 generated from the A-scans. When the first surface is in the XY plane, the A-scans represent the travel of the waves in the Z direction, and the B-scans represent a cross-sectional view in the XZ plane. The computing device can amalgamate (and gate based on distance from the first surface 111 to the desired signal) several B-scans to generate a C-scan, which represents a cross-sectional view of the component 110 in the XY plane. B-scans and C-scans can provide detailed information about the size and location of various structural features in the component 110 to characterize the internal features.

The ultrasound inducers 120 and ultrasound receivers 130 can be configured (via construction and/or angle relative to the first surface 111) to produce and measure various different modes of a generated ultrasound wave to produce the various scans. Although each paired set of ultrasound inducers 120 and ultrasound receivers 130 is shown inducing one corresponding wave mode 140a-c, it will be appreciated that each ultrasound inducer 120a-c can generate one or several different wave types and that each ultrasound receiver 130a-c can receive and measure one or several different wave modes, and the individual wave modes 140a-c are illustrated separately for clarity of explanation.

Depending on the type of material undergoing NDI, the frequencies used in the induced ultrasound waves can vary. For example, when inspecting metallic components, frequencies can vary from approximately 2 MHz (megahertz) to 10 MHz (± 10%), and when inspecting components made from a less-dense material (e.g., wood, stone, steel-reinforced cement), lower frequencies can be used (e.g., 50-500 kHz (kilohertz) ± 10%). Notably, these are just some examples ranges for some example materials, and others are possible.

In Figure 1A, the first ultrasound inducer 120a and the first ultrasound receiver 130a are illustrated as sending and receiving a shear wave 140a. The shear wave 140a is generated on the first surface 111 at a first location that travels through the body of the component 110 to the second surface 112, and reflects back to the first surface 111 at a second location, where the first ultrasound receiver 130a measures the shear wave 140a. The shear wave 140a can be induced at various angles relative to the first surface 111, and allows for the first ultrasound receiver 130a to measure the internal structures of the component 110.

In Figures 1A and 1B, the second ultrasound inducer 120b and the second ultrasound receiver 130b are illustrated sending and receiving longitudinal waves. The longitudinal waves include a surface wave 140b that travels along the first surface 111 (up to a depth of one wavelength in some examples) from a first location to a second location, and a structural wave 140c that travels deeper below the first surface 111 (in excess of one wavelength) from the first location to the second location, where the second ultrasound receiver 130b measures the longitudinal waves. Surface waves 140b allow for the second ultrasound receiver 130b to measure surface features, and can follow the first surface 111 over curved portions thereof. The structural waves 140c travel parallel to the first surface 111, and allow for the second ultrasound receiver 130b to measure the internal features of the component 110.

Although shown as generating and receiving a shear wave 140a, in various examples, the first ultrasound inducer 120a is angled relative to the first surface 111 to also produce longitudinal waves. As will be understood with reference to Snell's law, the angle of the first ultrasound inducer 120a relative to the first surface 111 and the refraction indices of the component 110 (and any couplant between the first ultrasound inducer 120a and the component 110) determines whether the induced wave reflects off of the first surface 111 or is refracted into the component 110. In various examples, the angle of the ultrasound inducer 120 incident to the first surface 111 is set to be at or below the critical angle to produce (via a single ultrasound inducer 120) both shear waves 140a and longitudinal waves on the first surface 111. By providing both shear and longitudinal waves from a single ultrasound inducer 120, the ultrasound receiver 130 is provided with a greater amount of information about the component 110 than if the ultrasound inducer 120 were angled so as to remove or avoid inducing longitudinal waves.

In Figure 1A, the third ultrasound inducer 120c and the third ultrasound receiver 130c are illustrated as sending and receiving a transverse wave 140d. The transverse wave 140d is generated on the first surface 111 at a third location that travels through the body of the component 110 to the second surface 112, and reflects back to the first surface 111 at a third location, where the third ultrasound receiver 130c measures the transverse wave 140d. The transverse wave 140d is induced perpendicular to the first surface 111, and allows for the first ultrasound receiver 130a to measure the internal structures of the component 110 at a specific portion of the component 110.

Figure 2 illustrates a waveform 200 for an ultrasonic wave generated by an ultrasound inducer 120 in a component 110 as measured by an ultrasound receiver 130 (such as are discussed in relation to Figures 1A and 1B), according to examples of the present disclosure. The waveform 200 is illustrated in the time and amplitude domains, but it will be understood that the waveform 200 can be presented in various other domains (e.g., frequency).

As an induced wave travels through a component, the path that the wave travels and the internal structure of that component along that path affect the wave in various waves. For example, traveling a longer path generally results in the wave arriving at a destination point at a later time than a wave traveling a shorter path to the destination; however, propagation speeds through a component can be affected by the frequency of the wave and/or various inclusions with different propagation speeds. In further examples, various internal structures can scatter the waves, affect the frequencies of the waves, attenuate the amplitudes of the waves, and two or more waves can interfere with one another if traveling over at least a portion of the same path through the component. Accordingly, the amplitude, time of flight, frequency, and location of reception of an ultrasound wave relative to the induced ultrasound wave can all provide information about the internal structure and features of a component.

In the illustrated waveform 200, several segments 210-240 are illustrated that represent different modes of the induced wave(s) that are received at different times. The several segments 210-240 can represent different transmission pathways to the receiver, from one or more inducers. For example, the first segment 210 can include a first shear wave generated by a first inducer and the second segment 220 can include a first surface wave generated by the same first inducer. Continuing the example, the third segment 230 can include a second shear wave generated by a second inducer and the fourth segment 240 can include a second surface wave generated by the second inducer, which have reflected or otherwise propagated through the component to be received by the first receiver.

The ultrasound test device (UTD) selects which segment of the received signal is of interest for further analysis by applying a gate 250 to the signal, thereby selecting a portion of the waveform 200 to develop a signature or fingerprint for the component from (and ignoring or using the unselected portions in a different signature/fingerprint). The gate 250 can be a variable data gate that is configurable to select different portions of the signal that are of interest for characterization and thereby develop a test signature based on the portion of the test signal according to one or more of a time of flight, an amplitude signal response, and a frequency signal response of the ultrasonic test wave though the component.

As shown in Figure 2, the gate 250 has been applied to select the third segment 230, but an operator can reapply the gate 250 by changing the duration and/or timing of the gate 250 to select additional or different segments in different examples. By setting the gate 250 at various times within the waveform 200, an operator can analyze the received signals that correspond with various depths within the component based on the portions of the ultrasonic test wave included within the gate 250 and the paths which those waves traveled through the component.

In various examples, the UTD can compensate for signal background noise in the received waves based on the characteristics of the originally induced wave and/or the expected characteristics of the received wave given the composition of the component being scanned. For example, the UTD can consider the frequency response of two waveforms induced in the component with different frequencies and normalize the frequencies of the two signals based on signal attenuation over the signal pathway to compensate for noise in the frequency responses of the signals.

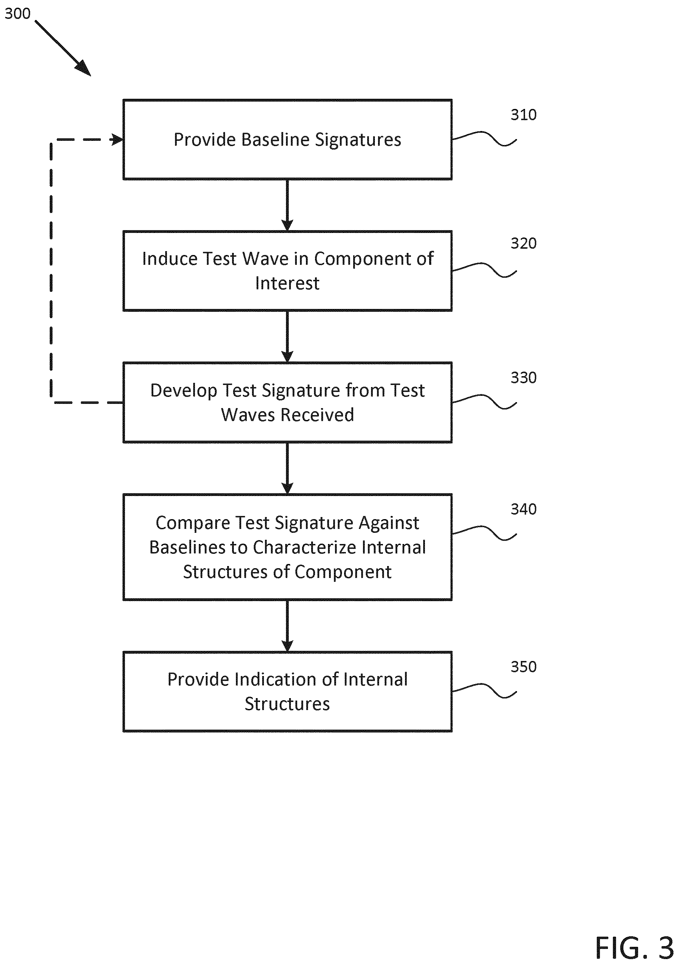

Figure 3 is a flowchart of a method 300 for characterizing internal structures in a component via ultrasound, according to examples of the present disclosure. Method 300 begins with block 310, where a database of baseline signature is provided for a component. In various examples, the baseline signature is an earlier provided NDI test result (e.g., a test signature developed per blocks 320 and 330 of an earlier performance of method 300) for the component, or can be an NDI test result from a different component that is known to exhibit a given internal structure. The baseline signature can include various wave patterns, A-scans, B-scans, and C-scans that are used to compare against test waves induced and measured in a component during NDI.

At block 320, the UTD induces test waves in a component of interest. In various examples, the UTD can induce several test waves which can use different ultrasonic frequencies (depending on the material of the component), be induced at different locations on the component, and produce different wave modes for analysis. The UTD can induce the test waves via one or more ultrasound inducers 120 (as discussed in Figures 1A and 1B), which can include lasers, piezoelectric transducers or electromagnetic transducers. The inducers induce the test waves on a first surface of the component, and the test waves can include various propagation modes to allow for inspection of different portions of the component. Some examples of the wave modes include: surface waves that travel along the first surface (up to a depth of one wavelength) from a first location to a second location; shear waves that travel from a first location on the first surface through the component to a second surface opposite to the first surface, and back to the first surface at a second location; and transverse waves that travel from a first location on the first surface through the component to the second surface, and back to the first surface at the first location.

At block 330, the UTD develops a test signature from the test waves induced in the component. Various ultrasound receivers receive and measure the test waves propagating through the component to develop various scans of the component. In various examples, the UTD gates the received and measured test waves to measure specific portions of the received waveform to develop a test signature (or a portion thereof) for a selected wave mode and/or wave path through the component.

The UTD can characterize the test waves using several techniques. In some examples, the UTD develops the test signature based on the time of flight of the test waves through the component (i.e., from the inducer to the receiver) and the amplitude signal response and/or attenuation of the test wave through the component (i.e., a difference between induced and received amplitudes of the test wave). In some examples, the UTD develops the test signature based on the frequency response of the test waves through the component (i.e., a difference between induced and received frequencies of the test wave).

The scans developed as a test signature (per block 330) can include various A-scans, which are combined into various B-scans or C-scans as part of NDI of the component and/or for use as a baseline signature for a later NDI, which the UTD compares against one or more of the baseline signatures (provided per block 310) at block 340. At block 340, the UTD characterizes an internal feature of the component based on the comparison between the baseline and test signatures for the component.

The UTD can select one or more baseline signatures to compare against the test signature, which can include looking for matches between known baseline signatures and an unknown test signature (e.g., to verify an identity of the component), looking for changes over time from previously captured test signatures and a current test signature for one component, and comparing different instances of a component with known internal features against an instance of the component with (currently) unknown internal features.

When comparing the signatures, the UTD aligns the baseline and test signatures with one another (e.g., based on a known origin point for the NDI, locational features or "landmarks" on the component, etc.) to ensure that the portions of the test signature are compared against corresponding portions in the baseline signatures.

Internal features that can be characterized by the comparison in a metallic component include, but at not limited to: grain size, grain orientation, grain morphology of the component, and wherein the baseline signature is established based on a database of test result signals corresponding to known grain patterns. Some additional examples of internal features that can be characterized include supports or inclusions (e.g., stones, support beams, meshes, etc.,) within a composite material, layer thicknesses and waviness in a laminate component, voids or air pockets within the component, grain size/orientation/morphology of a wooden or other biological component, etc.

At block 350, the UTD provides an indication of the internal structures. In various examples, the indication is provided as one or more images (e.g., the B-scans or C-scans) that indicate the internal structures, or that highlight the differences between the baseline and test signatures. In some examples, the indications include alerts for when a change is present between a baseline signature of a prior test signature and the current test signature or when the test signature matches a baseline signature associated with a given internal structure. In some examples, the indications include alerts for when a test signature matches a given baseline signature (e.g., when the inspected component matches a previously inspected component, or includes internal features that match a known-good component).

Figure 4 illustrates a computing device 400, according to examples of the present disclosure. Figure 4 illustrates example computing components of a computing device 400 or other processing system as may be used to perform NDI on various components by characterizing the internal structures thereof.

The computing device 400 includes a processor 410, a memory 420, and an interface 430. The processor 410 and the memory 420 provide computing functionality to run various programs and/or operations for the respective computing device 400, including the storage and retrieval of the various data described herein.

The processor 410, which may be any computer processor capable of performing the functions described herein, executes commands based on inputs received from a user and the data received from the interface 430.

The interface 430 connects the computing device 400 to external devices, such as, for example, external memory devices, external computing devices, a power source, a wireless transmitter, etc., and may include various connection ports (e.g., Universal Serial Bus (USB), Firewire, Ethernet, coaxial jacks) and cabling. The interface 430 is used to send and receive between computing devices 400 and manage the generation of ultrasound waves by one or more ultrasound inducers 120 and to receive and measure ultrasound waves by one or more ultrasound receivers 130. The interface 430, ultrasound receiver(s) 130, and/or software running on the computing device 400 or another device can amplify, clean, and manipulate data related to the received ultrasound waves to develop various scans of a component for analysis thereof.

The memory 420 is a computer-readable storage device that generally includes various processor-executable instructions, that when executed by the processor 410, perform the various functions related to characterizing internal structures via ultrasound as discussed herein. The processor-executable instructions may generally be described or organized into various "applications" or "modules" in the memory 420, although alternate implementations may have different functions and/or combinations of functions. The memory 420 also generally includes data structures that store information for use by or output by the various applications or modules. In the present disclosure, the memory 420 includes at least instructions for an operating system 421, one or more application(s) 422, baseline signatures 423, and test signatures 424. The memory 420 may be one or more memory devices, such as, for example, Random Access Memory (RAM), Read Only Memory (ROM), flash memory, or any other type of volatile or non-volatile storage medium that includes instructions that the processor 410 may execute.

When the computing device 400 provides the functionality of an UTD, the memory 420 includes processor executable instructions to provide the functionalities thereof described in the present disclosure. In some examples, the memory 420 includes databases for locally caching data that include listings or databases that identify the waveforms and baseline signatures 423 for earlier scans of a given component or profiles for various structural elements that can be compared against test signatures 424 to characterize the current internal structures of a component undergoing NDI.

In the current disclosure, reference is made to various examples. However, it should be understood that the present disclosure is not limited to specific described examples. When elements of the examples are described in the form of "at least one of A and B," it will be understood that examples including element A exclusively, including element B exclusively, and including element A and B are each contemplated. Furthermore, although some examples may achieve advantages over other possible solutions and/or over the prior art, whether or not a particular advantage is achieved by a given example is not limiting of the present disclosure. Thus, the examples, features, and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, examples described herein may be embodied as a system, method or computer program product. Accordingly, examples may take the form of an entirely hardware example, an entirely software example (including firmware, resident software, micro-code, etc.) or an example combining software and hardware examples that may all generally be referred to herein as a "circuit," "module" or "system." Furthermore, examples described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for examples of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Examples of the present disclosure are described herein with reference to flowchart illustrations and/or block diagrams of methods, apparatuses (systems), and computer program products according to examples of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various examples of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to examples of the present disclosure, other and further examples of the disclosure may be devised without departing from the basic scope thereof, and the scope thereof is determined by the claims that follow.

## Claims

1. A method (300) for ultrasound testing of components with an ultrasound test device, the method comprising:
inducing (320), by the ultrasound test device, ultrasonic test waves on a first surface (111) of a component (110), the ultrasonic test waves comprising at least two different ultrasonic test waves being selected from a group consisting of:
a surface wave (140b), traveling along the first surface from a first location to a second location;
a shear wave (140a), traveling from the first location on the first surface through the component to a second surface (112) opposite to the first surface, and back to the first surface at the second location; and
a transverse wave (140c), traveling from a third location on the first surface through the component to the second surface, and back to the first surface at the third location;
receiving, by the ultrasound test device, a signal in response to the ultrasonic test waves in the form of a waveform (200), the signal response comprising a waveform having a plurality of segments corresponding to the different induced waves that are received at different times;
selecting, by the ultrasound test device, which segment of the received signal is of interest for further analysis by applying a gate (250) to the received signal, thereby selecting a portion of the waveform (200);
developing (330), by the ultrasound test device, a test signature based on the selected portion of the waveform (200) in response to the ultrasonic test waves through the component;
characterizing (340), by the ultrasound test device, an internal feature of the component based on a comparison between the test signature and a baseline signature for the component; and
providing (350), by the ultrasound test device, an indication of the internal feature as characterized.

2. The method of claim 1, wherein the test signature is developed based on:
a time of flight and an amplitude signal response of the ultrasonic test waves through the component; and/or
a frequency response of the ultrasonic test waves through the component.

3. The method of claim 1 or 2, wherein the internal feature **characterized by** the comparison includes at least one of a grain size, grain orientation, and a grain morphology of the component, and wherein the baseline signature is established based on a database of test result signals corresponding to known grain patterns.

4. The method of any preceding claim, wherein one of the ultrasonic test waves is induced by one of:
a laser; and
a piezoelectric transducer or an electromagnetic acoustic transducer that converts an electrical signal into an acoustic wave.

5. The method of any preceding claim, wherein applying a gate (250) to the received signals at various times of signal reception corresponds to various depths in the component from a surface in which the ultrasonic test waves are induced.

6. A system, comprising:
an ultrasound test device arranged to induce ultrasonic test waves in a component (110) and measure the propagation of the ultrasonic test waves;
a computer processor (410); and
a memory (420) including instructions that when executed by the computer processor enable the system to perform an operation comprising:
inducing (320), by the ultrasound test device, ultrasonic test waves on a first surface (111) of the component (110) with the ultrasound test device, the ultrasonic test waves comprising at least two different ultrasonic test waves being selected from a group consisting of:
a surface wave (140b), traveling along the first surface from a first location to a second location;
a shear wave (140a), traveling from the first location on the first surface through the component to a second surface (112) opposite to the first surface, and back to the first surface at the second location; and
a transverse wave (140c), traveling from a third location on the first surface through the component to the second surface, and back to the first surface at the third location;
receiving, by the ultrasound test device, a signal in response to the ultrasonic test waves in the form of a waveform (200) having a plurality of segments corresponding to the different induced waves that are received at different times;
selecting, by the ultrasound test device, which segment of the received signal is of interest for further analysis by applying a gate (250) to the signal, thereby selecting a portion of the waveform (200);
measuring, by the ultrasound test device, the propagation of the ultrasonic test waves in the component with the ultrasound test device;
developing (330), by the ultrasound test device, a test signature based on the selected portion of the waveform (200) in response to the ultrasonic test waves through the component;
characterizing (350), by the ultrasound test device, an internal feature of the component based on a comparison between the test signature and a baseline signature for the component; and
providing (360) an indication of the internal feature as characterized.

7. The system of claim 6, wherein the instructions enable the system to perform the operation comprising developing the test signature based on:
a time of flight and an amplitude signal response of the ultrasonic test waves through the component; and/or
a frequency response of the ultrasonic test waves through the component.

8. The system of claim 6 or 7, wherein the internal feature **characterized by** the comparison includes at least one of a grain size, grain orientation, and a grain morphology of the component, and wherein the instructions enable the computer system to perform the operation comprising establishing the baseline signature based on a database of test result signals corresponding to known grain patterns.

9. The system of any of claims 6 to 8, wherein the ultrasound test device includes a laser interferometer, and the instructions enable the system to perform the operation further comprising collecting the ultrasonic test waves by the laser interferometer.

10. The system of any of claims 6 to 8, wherein the instructions enable the system to perform the operation comprising inducing the ultrasonic test waves with a piezoelectric transducer or an electromagnetic acoustic transducer that converts an electrical signal into an acoustic wave.

11. The system of any of claims 6 to 10, wherein the instructions enable the system to perform the operation comprising characterizing an internal feature by gating received signals at various times of signal reception to correspond to various depths in the component from a surface in which the ultrasonic test waves are induced.

12. A computer program including instructions that, when executed by a computer processor of a system including an ultrasound test device, enable the system to perform an operation comprising:
inducing (320) ultrasonic test waves on a first surface (111) a component (110) with an ultrasound test device;
measuring the propagation of the ultrasonic test waves in the component with the ultrasound test device), the ultrasonic test wave comprising at least two different ultrasonic test waves being selected from a group consisting of:
a surface wave (140b), traveling along the first surface from a first location to a second location;
a shear wave (140a), traveling from the first location on the first surface through the component to a second surface (112) opposite to the first surface, and back to the first surface at the second location; and
a transverse wave (140c), traveling from a third location on the first surface through the component to the second surface, and back to the first surface at the third location;
receiving, by the ultrasound test device, a signal in response to the ultrasonic test wave in the form of a waveform (200) having a plurality of segments corresponding to the different induced waves that are received at different times;
selecting, by the ultrasound test device, which segment of the received signal is of interest for further analysis by applying a gate (250) to the signal, thereby selecting a portion of the waveform (200);
developing (330), by the ultrasound test device, a test signature based on the selected portion of the waveform (200) in response to the ultrasonic test waves through the component;
characterizing (350), by the ultrasound test device, an internal feature of the component based on a comparison between the test signature and a baseline signature for the component; and
providing (360) an indication of the internal feature as characterized.

13. The computer program of claim 12, wherein the instructions enable the system to perform the operation comprising developing the test signature based on:
a time of flight and an amplitude signal response of the ultrasonic test waves through the component; and/or
a frequency response of the ultrasonic test waves through the component.

14. The computer program of claim 12 or 13, wherein the internal feature **characterized by** the comparison includes at least one of a grain size, grain orientation, and a grain morphology of the component, and wherein the instructions enable the computer processor to perform the operation comprising establishing the baseline signature based on a database of test result signals corresponding to known grain patterns.

15. A computer-readable storage device including a computer program according to any one of claims 12 to 14.

## Patentansprüche

1. Verfahren (300) zur Ultraschallprüfung von Bauteilen mit einer Ultraschallprüfvorrichtung, wobei das Verfahren umfasst:
Induzieren (320) von Ultraschallprüfwellen auf einer ersten Oberfläche (111) eines Bauteils (110) durch die Ultraschallprüfvorrichtung, wobei die Ultraschallprüfwellen mindestens zwei verschiedene Ultraschallprüfwellen umfassen, die aus einer Gruppe ausgewählt werden, die besteht aus:
einer Oberflächenwelle (140b), die sich entlang der ersten Oberfläche von einem ersten Ort zu einem zweiten Ort ausbreitet;
einer Scherwelle (140a), die sich von dem ersten Ort auf der ersten Oberfläche durch das Bauteil zu einer zweiten Oberfläche (112) gegenüber der ersten Oberfläche und zurück zur ersten Oberfläche an dem zweiten Ort ausbreitet; und
einer Transversalwelle (140c), die sich von einem dritten Ort auf der ersten Oberfläche durch das Bauteil zu der zweiten Oberfläche und zurück zu der ersten Oberfläche an dem dritten Ort ausbreitet;
Empfangen eines Signals durch die Ultraschallprüfvorrichtung als Antwort auf die Ultraschallprüfwellen in Form einer Wellenform (200), wobei die Signalantwort eine Wellenform mit einer Mehrzahl von Segmenten umfasst, die den verschiedenen induzierten Wellen entsprechen, die zu verschiedenen Zeiten empfangen werden;
Auswählen, durch die Ultraschallprüfvorrichtung, welches Segment des empfangenen Signals für eine weitere Analyse von Interesse ist, indem ein Gate (250) auf das empfangene Signal angewendet wird, wodurch ein Teil der Wellenform (200) ausgewählt wird;
Entwickeln (330), durch die Ultraschallprüfvorrichtung, einer Prüfsignatur auf der Grundlage des ausgewählten Abschnitts der Wellenform (200) als Antwort auf die das Bauteil durchlaufenden Ultraschallprüfwellen;
Charakterisieren (340) eines internen Merkmals des Bauteils durch die Ultraschallprüfvorrichtung auf der Grundlage eines Vergleichs zwischen der Prüfsignatur und einer Basissignatur für das Bauteil; und
Bereitstellen (350) einer Angabe des charakterisierten internen Merkmals durch die Ultraschallprüfvorrichtung.

2. Verfahren nach Anspruch 1, bei dem die Prüfsignatur entwickelt wird auf der Grundlage von:
einer Laufzeit und einer Amplitudensignalantwort der das Bauteil durchlaufenden Ultraschallprüfwellen und/oder
einer Frequenzantwort der das Bauteil durchlaufenden Ultraschallprüfwellen.

3. Verfahren nach Anspruch 1 oder 2, bei dem das durch den Vergleich charakterisierte interne Merkmal mindestens eines von Korngröße, Kornorientierung und Kornmorphologie des Bauteils umfasst,
und bei dem die Basissignatur auf der Grundlage einer Datenbank von bekannten Kornmustern entsprechenden Prüfergebnissignalen erstellt wird.

4. Verfahren nach einem der vorhergehenden Ansprüche, bei dem eine der Ultraschallprüfwellen durch eines induziert wird von:
einen Laser; und
einem piezoelektrischen Wandler oder einem elektromagnetischen akustischen Wandler, der ein elektrisches Signal in eine akustische Welle umwandelt.

5. Verfahren nach einem der vorhergehenden Ansprüche, bei dem das Anwenden eines Gates (250) auf die empfangenen Signale zu verschiedenen Zeitpunkten des Signalempfangs verschiedenen Tiefen in dem Bauteil von einer Oberfläche entspricht, an der die Ultraschallprüfwellen induziert werden.

6. System mit:
einer Ultraschallprüfvorrichtung, die eingerichtet ist, um Ultraschallprüfwellen in einem Bauteil (110) zu induzieren und die Ausbreitung der Ultraschallprüfwellen zu messen;
einem Computerprozessor (410); und
einem Speicher (420), der Anweisungen enthält, die, wenn sie von dem Computerprozessor ausgeführt werden, das System in die Lage versetzen, einen Vorgang auszuführen, der umfasst:
Induzieren (320) von Ultraschallprüfwellen auf einer ersten Oberfläche (111) des Bauteils (110) durch die Ultraschallprüfvorrichtung, wobei die Ultraschallprüfwellen mindestens zwei verschiedene Ultraschallprüfwellen umfassen, die aus einer Gruppe ausgewählt werden, die besteht aus:
einer Oberflächenwelle (140b), die sich entlang der ersten Oberfläche von einem ersten Ort zu einem zweiten Ort ausbreitet;
einer Scherwelle (140a), die sich von dem ersten Ort auf der ersten Oberfläche durch das Bauteil zu einer zweiten Oberfläche (112) gegenüber der ersten Oberfläche und zurück zur ersten Oberfläche an dem zweiten Ort ausbreitet; und
einer Transversalwelle (140c), die sich von einem dritten Ort auf der ersten Oberfläche durch das Bauteil zur zweiten Oberfläche und zurück zur ersten Oberfläche an dem dritten Ort ausbreitet;
Empfangen eines Signals durch die Ultraschallprüfvorrichtung als Reaktion auf die Ultraschallprüfwellen in Form einer Wellenform (200) mit einer Mehrzahl von Segmenten, die den verschiedenen induzierten Wellen entsprechen, die zu verschiedenen Zeiten empfangen werden;
Auswählen, durch die Ultraschallprüfvorrichtung, welches Segment des empfangenen Signals für eine weitere Analyse von Interesse ist, indem ein Gate (250) auf das Signal angewendet wird, wodurch ein Teil der Wellenform (200) ausgewählt wird;
Messen der Ausbreitung der Ultraschallprüfwellen in dem Bauteil mit der Ultraschallprüfvorrichtung durch die Ultraschallprüfvorrichtung;
Entwickeln (330) einer Prüfsignatur durch die Ultraschallprüfvorrichtung auf der Grundlage des ausgewählten Abschnitts der Wellenform (200) als Reaktion auf die das Bauteil durchlaufenden Ultraschallprüfwellen;
Charakterisieren (350) eines internen Merkmals des Bauteils durch die Ultraschallprüfvorrichtung auf der Grundlage eines Vergleichs zwischen der Prüfsignatur und einer Basissignatur für das Bauteil; und
Bereitstellen (360) einer Angabe des charakterisierten internen Merkmals.

7. System nach Anspruch 6, wobei die Anweisungen das System in die Lage versetzen, den Vorgang auszuführen, der das Entwickeln der Prüfsignatur umfasst, basierend auf:
einer Laufzeit und einer Amplitudensignalantwort der das Bauteil durchlaufenden Ultraschallprüfwellen; und/oder
einer Frequenzantwort der das Bauteil durchlaufenden Ultraschallprüfwellen.

8. System nach Anspruch 6 oder 7, bei dem das durch den Vergleich charakterisierte interne Merkmal mindestens eines von einer Korngröße, einer Kornorientierung und einer Kornmorphologie des Bauteils umfasst,
und bei dem die Anweisungen das Computersystem in die Lage versetzen, den Vorgang, der das Erstellen der Basisliniensignatur umfasst, auf der Grundlage einer Datenbank von bekannten Kornmustern entsprechenden Prüfergebnissignalen durchzuführen.

9. System nach einem der Ansprüche 6 bis 8, bei dem die Ultraschallprüfvorrichtung ein Laserinterferometer umfasst und die Anweisungen das System in die Lage versetzen, den Vorgang durchzuführen, der ferner das Sammeln der Ultraschallprüfwellen durch das Laserinterferometer umfasst.

10. System nach einem der Ansprüche 6 bis 8, bei dem die Anweisungen das System in die Lage versetzen, den Vorgang, der das Induzieren der Ultraschallprüfwellen umfasst, mit einem piezoelektrischen Wandler oder einem elektromagnetischen akustischen Wandler durchzuführen, der ein elektrisches Signal in eine akustische Welle umwandelt.

11. System nach einem der Ansprüche 6 bis 10, bei dem die Anweisungen das System in die Lage versetzen, den Vorgang, der das Charakterisieren eines internen Merkmals umfasst, durch Ausblenden von zu verschiedenen Zeitpunkten des Signalempfangs empfangenen Signalen entsprechend verschiedenen Tiefen in dem Bauteil von einer Oberfläche, an der die Ultraschallprüfwellen induziert werden, durchzuführen.

12. Computerprogramm mit Anweisungen, die, wenn sie von einem Computerprozessor eines Systems mit einer Ultraschallprüfvorrichtung ausgeführt werden, das System in die Lage versetzen, einen Vorgang auszuführen, der umfasst:
Induzieren (320) von Ultraschallprüfwellen auf einer ersten Oberfläche (111) eines Bauteils (110) mit einer Ultraschallprüfvorrichtung;
Messen der Ausbreitung der Ultraschallprüfwellen in dem Bauteil mit der Ultraschallprüfvorrichtung, wobei die Ultraschallprüfwelle mindestens zwei verschiedene Ultraschallprüfwellen umfasst, die aus einer Gruppe ausgewählt werden, die besteht aus:
einer Oberflächenwelle (140b), die sich entlang der ersten Oberfläche von einem ersten Ort zu einem zweiten Ort ausbreitet;
einer Scherwelle (140a), die sich von dem ersten Ort auf der ersten Oberfläche durch das Bauteil zu einer zweiten Oberfläche (112) gegenüber der ersten Oberfläche und zurück zu der ersten Oberfläche an dem zweiten Ort ausbreitet; und
einer Transversalwelle (140c), die sich von einem dritten Ort auf der ersten Oberfläche durch das Bauteil zu der zweiten Oberfläche und zurück zu der ersten Oberfläche an dem dritten Ort ausbreitet;
Empfangen eines Signals durch die Ultraschallprüfvorrichtung als Reaktion auf die Ultraschallprüfwelle in Form einer Wellenform (200) mit einer Mehrzahl von Segmenten, die den verschiedenen induzierten Wellen entsprechen, die zu verschiedenen Zeiten empfangen werden;
Auswählen, durch die Ultraschallprüfvorrichtung, welches Segment des empfangenen Signals für eine weitere Analyse von Interesse ist, indem ein Gate (250) auf das Signal angewendet wird, wodurch ein Teil der Wellenform (200) ausgewählt wird;
Entwickeln (330) einer Prüfsignatur durch die Ultraschallprüfvorrichtung auf der Grundlage des ausgewählten Teils der Wellenform (200) als Reaktion auf die das Bauteil durchlaufenden Ultraschallprüfwellen;
Charakterisieren (350) eines internen Merkmals des Bauteils durch die Ultraschallprüfvorrichtung auf der Grundlage eines Vergleichs zwischen der Prüfsignatur und einer Basissignatur für das Bauteil; und
Bereitstellen (360) einer Angabe des charakterisierten internen Merkmals.

13. Computerprogramm nach Anspruch 12, wobei die Anweisungen das System in die Lage versetzen, den Vorgang auszuführen, der das Entwickeln der Prüfsignatur umfasst, basierend auf:
einer Laufzeit und einer Amplitudensignalantwort der das Bauteil durchlaufenden Ultraschallprüfwellen; und/oder
einer Frequenzantwort der das Bauteil durchlaufenden Ultraschallprüfwellen.

14. Computerprogramm nach Anspruch 12 oder 13, bei dem das durch den Vergleich charakterisierte interne Merkmal mindestens eines von Korngröße, Kornorientierung und Kornmorphologie des Bauteils umfasst, und bei dem die Anweisungen den Computerprozessor in die Lage versetzen, den Vorgang, der das Erstellen der Basissignatur umfasst, auf der Grundlage einer Datenbank von bekannten Kornmustern entsprechenden Prüfergebnissignalen durchzuführen.

15. Computerlesbare Speichervorrichtung, die ein Computerprogramm nach einem der Ansprüche 12 bis 14 enthält.

## Revendications

1. Procédé (300) pour tester par ultrasons des composants avec un dispositif de test par ultrasons, le procédé comprenant les étapes consistant à :
induire (320), par l'intermédiaire du dispositif de test par ultrasons, des ondes de test ultrasonores sur une première surface (111) d'un composant (110), les ondes de test ultrasonores comprenant au moins deux ondes de test ultrasonores différentes étant sélectionnées dans un groupe comprenant :
une onde de surface (140b), se déplaçant le long de la première surface d'un premier emplacement à un deuxième emplacement ;
une onde de cisaillement (140a), se déplaçant à partir du premier emplacement sur la première surface à travers le composant vers une seconde surface (112) opposée à la première surface, et revenant à la première surface au niveau du deuxième emplacement ; et
une onde transversale (140c), se déplaçant à partir d'un troisième emplacement sur la première surface à travers le composant jusqu'à la seconde surface, et revenant à la première surface au niveau du troisième emplacement ;
recevoir, par l'intermédiaire du dispositif de test par ultrasons, un signal en réponse aux ondes de test ultrasonores sous la forme d'une forme d'onde (200), la réponse de signal comprenant une forme d'onde présentant une pluralité de segments correspondant aux différentes ondes induites qui sont reçues à des moments différents ;
sélectionner, par l'intermédiaire du dispositif de test par ultrasons, quel segment du signal reçu présente un intérêt pour une analyse supplémentaire en appliquant une porte (250) au signal reçu, en sélectionnant ainsi une partie de la forme d'onde (200) ;
développer (330), par l'intermédiaire du dispositif de test par ultrasons, une signature de test basée sur la partie sélectionnée de la forme d'onde (200) en réponse aux ondes de test ultrasonores à travers le composant ;
caractériser (340), par l'intermédiaire du dispositif de test par ultrasons, une caractéristique interne du composant sur la base d'une comparaison entre la signature de test et une signature de base pour le composant ; et
fournir (350), par l'intermédiaire du dispositif de test par ultrasons, une indication de la caractéristique interne telle que caractérisée.

2. Procédé selon la revendication 1, dans lequel la signature de test est développée sur la base :
d'un temps de vol et d'une réponse de signal d'amplitude des ondes de test ultrasonores à travers le composant ; et/ou
une réponse en fréquence des ondes de test ultrasonores à travers le composant.

3. Procédé selon la revendication 1 ou 2, dans lequel la caractéristique interne **caractérisée par** la comparaison inclut au moins une parmi une taille de grain, une orientation de grain et une morphologie de grain du composant, et dans lequel la signature de référence est établie sur la base d'une base de données de signaux de résultat de test correspondant à des motifs de grain connus.

4. Procédé selon l'une quelconque des revendications précédentes, dans lequel l'une des ondes de test ultrasonores est induite par un certain parmi :
un laser ; et
un transducteur piézoélectrique ou un transducteur acoustique électromagnétique qui convertit un signal électrique en une onde acoustique.

5. Procédé selon l'une quelconque des revendications précédentes, dans lequel l'application d'une porte (250) aux signaux reçus à divers instants de la réception de signal correspond à diverses profondeurs dans le composant à partir d'une surface dans laquelle les ondes de test ultrasonores sont induites.

6. Système, comprenant :
un dispositif de test par ultrasons agencé pour induire des ondes de test ultrasonores dans un composant (110) et mesurer la propagation des ondes de test ultrasonores ;
un processeur informatique (410); et
une mémoire (420) incluant des instructions qui, lorsqu'elles sont exécutées par le processeur informatique, permettent au système d'exécuter une opération comprenant :
induire (320), par l'intermédiaire du dispositif de test par ultrasons, des ondes de test ultrasonores sur une première surface (111) du composant (110) à l'aide du dispositif de test par ultrasons, les ondes de test ultrasonores comprenant au moins deux ondes de test ultrasonores différentes étant sélectionnées dans un groupe comprenant :
une onde de surface (140b), se déplaçant le long de la première surface d'un premier emplacement à un deuxième emplacement ;
une onde de cisaillement (140a), se déplaçant à partir du premier emplacement sur la première surface à travers le composant vers une seconde surface (112) opposée à la première surface, et revenant à la première surface au niveau du deuxième emplacement ; et
une onde transversale (140c), se déplaçant à partir d'un troisième emplacement sur la première surface à travers le composant jusqu'à la seconde surface, et revenant à la première surface au niveau du troisième emplacement ;
recevoir, par l'intermédiaire du dispositif de test par ultrasons, un signal en réponse aux ondes de test ultrasonores sous la forme d'une forme d'onde (200) présentant une pluralité de segments correspondant aux différentes ondes induites qui sont reçues à des instants différents ;
sélectionner, par l'intermédiaire du dispositif de test par ultrasons, quel segment du signal reçu présente un intérêt pour une analyse ultérieure en appliquant une porte (250) au signal, en sélectionnant ainsi une partie de la forme d'onde (200) ;
mesurer, par l'intermédiaire du dispositif de test par ultrasons, la propagation des ondes de test ultrasonores en recevant, par l'intermédiaire du dispositif de test par ultrasons, un signal en réponse aux ondes de test ultrasonores du composant avec le dispositif de test par ultrasons ;
développer (330), par l'intermédiaire du dispositif de test par ultrasons, une signature de test basée sur la partie sélectionnée de la forme d'onde (200) en réponse aux ondes de test ultrasonores à travers le composant ;
caractériser (350), par l'intermédiaire du dispositif de test par ultrasons, une caractéristique interne du composant sur la base d'une comparaison entre la signature de test et une signature de base pour le composant ; et
fournir (360) une indication de la caractéristique interne telle que caractérisée.

7. Système selon la revendication 6, dans lequel les instructions permettent au système d'effectuer l'opération comprenant le développement de la signature de test sur la base :
d'un temps de vol et d'une réponse de signal d'amplitude des ondes de test ultrasonores à travers le composant ; et/ou
une réponse en fréquence des ondes de test ultrasonores à travers le composant.

8. Système selon la revendication 6 ou 7, dans lequel la caractéristique interne **caractérisée par** la comparaison inclut au moins une parmi une taille de grain, une orientation de grain et une morphologie de grain du composant, et dans lequel les instructions permettent au système informatique d'effectuer l'opération consistant à établir la signature de référence sur la base d'une base de données de signaux de résultat de test correspondant à des motifs de grain connus.

9. Système selon l'une quelconque des revendications 6 à 8, dans lequel le dispositif de test par ultrasons inclut un interféromètre laser, et les instructions permettent au système d'effectuer l'opération comprenant en outre une collecte des ondes de test ultrasonores par l'interféromètre laser.

10. Système selon l'une quelconque des revendications 6 à 8, dans lequel les instructions permettent au système d'effectuer l'opération incluant une induction des ondes de test ultrasonores avec un transducteur piézoélectrique ou un transducteur acoustique électromagnétique qui convertit un signal électrique en une onde acoustique.

11. Système selon l'une quelconque des revendications 6 à 10, dans lequel les instructions permettent au système d'effectuer l'opération comprenant une caractérisation d'une caractéristique interne en pilotant les signaux reçus à divers instants de la réception du signal pour qu'ils correspondent à diverses profondeurs dans le composant à partir d'une surface dans laquelle les ondes de test ultrasonores sont induites.

12. Programme informatique incluant des instructions qui, lorsqu'elles sont exécutées par un processeur informatique d'un système incluant un dispositif de test par ultrasons, permettent au système d'exécuter une opération comprenant :
induire (320) des ondes de test ultrasonores sur une première surface (111) d'un composant (110) avec un dispositif de test par ultrasons ;
mesurer la propagation des ondes de test ultrasonores dans le composant avec le dispositif de test par ultrasons, l'onde de test par ultrasons comprenant au moins deux ondes de test ultrasonores différentes étant sélectionnée dans un groupe comprenant :
une onde de surface (140b), se déplaçant le long de la première surface d'un premier emplacement à un deuxième emplacement ;
une onde de cisaillement (140a), se déplaçant à partir du premier emplacement sur la première surface à travers le composant vers une seconde surface (112) opposée à la première surface, et revenant à la première surface au niveau du deuxième emplacement ; et
une onde transversale (140c), se déplaçant à partir d'un troisième emplacement sur la première surface à travers le composant jusqu'à la seconde surface, et revenant à la première surface au niveau du troisième emplacement ;
recevoir, par l'intermédiaire du dispositif de test par ultrasons, un signal en réponse à l'onde de test ultrasonore sous la forme d'une forme d'onde (200) présentant une pluralité de segments correspondant aux différentes ondes induites qui sont reçues à des instants différents ;
sélectionner, par l'intermédiaire du dispositif de test par ultrasons, quel segment du signal reçu présente un intérêt pour une analyse ultérieure en appliquant une porte (250) au signal, en sélectionnant ainsi une partie de la forme d'onde (200) ;
développer (330), par l'intermédiaire du dispositif de test par ultrasons, une signature de test basée sur la partie sélectionnée de la forme d'onde (200) en réponse aux ondes de test ultrasonores à travers le composant ;
caractériser (350), par l'intermédiaire du dispositif de test par ultrasons, une caractéristique interne du composant sur la base d'une comparaison entre la signature de test et une signature de base pour le composant ; et
fournir (360) une indication de la caractéristique interne telle que caractérisée.

13. Programme informatique selon la revendication 12, dans lequel les instructions permettent au système d'effectuer l'opération comprenant un développement de la signature de test sur la base :
d'un temps de vol et d'une réponse de signal d'amplitude des ondes de test ultrasonores à travers le composant ; et/ou
une réponse en fréquence des ondes de test ultrasonores à travers le composant.

14. Programme informatique selon la revendication 12 ou 13, dans lequel la caractéristique interne **caractérisée par** la comparaison inclut au moins une parmi une taille de grain, une orientation de grain et une morphologie de grain du composant, et dans lequel les instructions permettent au processeur informatique d'effectuer l'opération comprenant un établissement de la signature de référence sur la base d'une base de données de signaux de résultat de test correspondant à des motifs de grain connus.

15. Dispositif de stockage lisible par ordinateur incluant un programme informatique selon l'une quelconque des revendications 12 à 14.
